# EUROPÄISCHE PATENTSCHRIFT

(11) **EP 2 855 935 B1**
(45) Veröffentlichungstag und Bekanntmachung des Hinweises auf die Patenterteilung: **01.07.2020**
(21) Anmeldenummer: 13715607.1
(22) Anmeldetag: 05.04.2013
(51) Int. Cl.: F01N 3/20, F04B 17/04, F04B 53/14

(54) **SYSTEM ZUR ABGASNACHBEHANDLUNG BEI VERBRENNUNGSMOTOREN**
SYSTEM FOR EXHAUST GAS TREATMENT FOR INTERNAL COMBUSTION ENGINES
SYSTÈME DE POST-TRAITEMENT DES GAZ D'ÉCHAPPEMENT SUR DES MOTEURS À COMBUSTION INTERNE

(30) Priorität: 02.06.2012 DE 102012010980
(43) Veröffentlichungstag der Anmeldung: 08.04.2015
(73) Patentinhaber: Hydac Electronic GmbH, 66128 Saarbrücken (DE)
(72) Erfinder: GROH, Christian, 66453 Gersheim (DE); KATTLER, Frank, 66346 Püttlingen (DE)
(74) Vertreter: Bartels und Partner, Patentanwälte
(86) Internationale Anmeldenummer: PCT/EP2013/001018
(87) Internationale Veröffentlichungsnummer: WO 2013/178307

(56) Entgegenhaltungen:
- WO-A1-03/027454
- WO-A1-2007/071263
- DE-A1-102004 011 123
- DE-C1- 19 819 579
- US-A1- 2006 013 704
- US-A1- 2010 212 303
- US-A1- 2010 313 553

## Beschreibung

Die Erfindung betrifft ein System zur Abgasnachbehandlung bei Verbrennungsmotoren, mit den Merkmalen im Oberbegriff von Anspruch 1. Derartige Systeme, die in der Fachsprache auch als Adblue-System bezeichnet werden, können in der Fahrzeugtechnik eingesetzt werden, um im Abgasstrom enthaltene Stickoxyde zu Stickstoff zu reduzieren. Diesbezüglich wird so vorgegangen, dass eine wässrige Harnstofflösung über eine Zuführeinrichtung von einem Vorratstank dosiert dem Abgasstrom zugeführt wird, wobei aus dem Harnstoff durch Hydrolyse Ammoniak gewonnen wird. Dieses wirkt im Abgasstrom als selektives Reduktionsmittel. Um den Wirkungsgrad der Reduktion zu optimieren, wird die wässrige Harnstofflösung dem Abgasstrom mittels einer durch ein Steuergerät lastabhängig gesteuerten Pumpe dosiert zugeführt.

Der Wassergehalt der als zusätzlicher Betriebsstoff dienenden Harnstofflösung wirkt sich auf das Betriebsverhalten nachteilig aus. Das Gefrieren der wässrigen Lösung kann zum Ausfall des gesamten Systems führen, insbesondere durch Schädigung oder Zerstörung der Pumpe und der mit ihr verbundenen Zuführeinrichtung. Diese Gefahr besteht insbesondere während Standzeiten bei Frosttemperaturen.

Die WO 2007/071263 A1 offenbart ein System zur Abgasnachbehandlung bei einem Verbrennungsmotor, aufweisend zumindest eine Pumpe für eine dosierte Zufuhr einer gefrierbaren Substanz, insbesondere in Form einer wässrigen Harnstofflösung, zu einer diese in den Abgasstrom des Verbrennungsmotors einführenden Zuführeinrichtung, wobei Teile der Pumpe mit mindestens einem Fluidraum für die zumindest zeitweise Aufnahme der gefrierbaren Substanz zusammenwirken, wobei als Schutz gegen eine Schädigung des Systems durch Volumenausdehnung bei Gefrieren der Substanz eine Ausgleichseinrichtung auf den jeweiligen Fluidraum derart einwirkt, dass eine mit einer Zunahme des Fluiddrucks bei Gefrieren einhergehende Volumenausdehnung der Substanz innerhalb des zuordenbaren Fluidraumes kompensiert ist, wobei die Ausgleichseinrichtung zumindest ein mit dem Fluidraum des Systems in Verbindung stehendes Bauteil aufweist, das eine eine druckabhängige Vergrößerung des Fluidraums ermöglichende, vorgegebene Nachgiebigkeit besitzt, wobei eine Pumpe vom Verdrängertyp mit zumindest einem durch einen Aktuator bewegbaren Verdrängerelement als Bauteil vorgesehen ist, und dass dieses als Bestandteil der Ausgleichseinrichtung über eine eine druckabhängige Relativbewegung ermöglichende, nachgiebige Koppeleinrichtung mit dem Aktuator zusammenwirkt, wobei eine Kolbenpumpe mit zumindest einem Pumpenkolben vorgesehen ist und wobei die Koppeleinrichtung eine zwischen dem jeweiligen Pumpenkolben und dem Aktuator eingespannte Druckfeder aufweist, die dem Pumpenkolben gegen die Federkraft eine Bewegung relativ zum Aktuator ermöglicht, die den Fluidraum vergrößert. Der rotatorische Antrieb des Aktuators erfolgt über eine Kurbel.

Weitere Systeme zur Abgasnachbehandlung bei Verbrennungsmotoren gehen aus der DE 10 2004 011 123 A1, der US 2006/0013704 A1, der US 2010/0313553 A1, der US 2010/0212303 A1, der WO 03/027454 A1 und der DE 198 19 579 C1 hervor.

Im Hinblick auf diese Problematik liegt der Erfindung die Aufgabe zugrunde, ein Adblue-System zur Verfügung zu stellen, bei dem die Gefahr einer Schädigung durch Frosteinflüsse minimiert ist und dabei trotzdem eine genaue Dosierung des Reduktionsmittels ermöglicht.

Erfindungsgemäß ist diese Aufgabe durch ein System gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass der Aktuator durch ein Betätigungsteil eines Magnetkolbens gebildet ist, der im Polrohr einer Elektromagneteinrichtung axial bewegbar ist.

Es ist ferner vorgesehen, dass als Schutz gegen eine Schädigung des Systems durch Volumenausdehnung bei Gefrieren der Substanz eine Ausgleichseinrichtung vorgesehen ist, die die mit einer Zunahme des Fluiddrucks bei Gefrieren einhergehende Volumenausdehnung kompensiert. Die ansonsten bestehende Gefahr, dass es bei einem Gefrieren einer wässrigen Substanz, wie dies bei einer wässrigen Harnstofflösung unter Frostbedingungen der Fall ist, aufgrund der damit verbundenen Volumenvergrößerung zu einem Bersten von Wandungen oder insbesondere zu einer Beschädigung oder Zerstörung der Pumpe und/oder der ihr zugehörigen Ventileinrichtungen kommt, ist dadurch vermieden.

Die Ausgleichseinrichtung weist zumindest ein mit dem Fluidraum des Systems in Verbindung stehendes Bauteil auf, das eine eine druckabhängige Vergrößerung des Fluidraums ermöglichende, vorgegebene Nachgiebigkeit besitzt.

Um eine derartige Nachgiebigkeit zur Verfügung zu stellen, ist bei der erfindungsgemäßen Lösung, bei der eine Pumpe vom Verdrängertyp mit zumindest einem durch einen Aktuator bewegbaren Verdrängerelement vorgesehen ist, die Anordnung so getroffen, dass das Verdrängerelement über eine eine druckabhängige Relativbewegung ermöglichende, nachgiebige Koppeleinrichtung mit dem Aktuator zusammenwirkt.

Die Kolbenpumpe ist mit zumindest einem Pumpenkolben vorgesehen, wobei die Koppeleinrichtung eine zwischen dem jeweiligen Pumpenkolben und dem Aktuator eingespannte Druckfeder aufweist, die gegen ihre Federkraft eine den Fluidraum vergrößernde Kolbenbewegung relativ zum Aktuator ermöglicht.

Bei besonders vorteilhaften Ausführungsbeispielen kann der Pumpenkolben an der vom Fluidraum abgewandten Seite durch ein im Pumpenzylinder geführtes Hülsenteil verlängert sein, das zum Betätigungsteil des Magnetkolbens offen ist, wobei in dem Innenraum des Hülsenteils die Druckfeder angeordnet ist. Dadurch, dass die verlängerte Kolbenführung gleichzeitig als Federgehäuse genutzt ist, lässt sich für die Pumpe eine kompakte Bauweise realisieren.

In vorteilhafter Weise kann die Elektromagneteinrichtung als drückender Magnet ausgebildet sein, der bei Bestromung der Magnetwicklung den Magnetkolben mit dem Betätigungsteil gegen die Druckfeder drückt und den Pumpenkolben für einen Förderhub bewegt.

Vorzugweise ist die Anordnung hierbei so getroffen, dass am Pumpenkolben eine diesen bei fehlender Bestromung der Magnetwicklung für einen Rückhub bewegende Rückstellfeder angreift.

Um das Betätigungsteil des Magnetkolbens bei fehlender Bestromung der Magnetwicklung kraftschlüssig gegen die Druckfeder hin vorzuspannen, kann am Magnetkolben eine der Rückstellfeder entgegenwirkende Feder angreifen, wobei die Federkraft dieser Feder geringer ist als diejenige der Rückstellfeder.

Bei besonders vorteilhaften Ausführungsbeispielen ist eine sich bei Bestromung erwärmende Magnetwicklung als Wärmequelle vorgesehen, die über eine thermische Kopplung mit der Pumpe als Einfrierschutz und Auftaueinrichtung dient. In besonders vorteilhafter Weise wird dadurch erreicht, dass bei Kaltstart des Verbrennungsmotors unter Frostbedingungen bei gefrorener Harnstofflösung und dadurch blockierter Pumpe die Kaltlaufphase, bei der keine Abgasnachbehandlung stattfindet, lediglich so lange dauert, wie durch die Wärme der Magnetwicklung die Pumpe automatisch aufgetaut ist, so dass diese den Betrieb aufnimmt und die Abgasnachbehandlung einsetzt. Zudem ist durch die von der Magnetwicklung zur Verfügung gestellte Wärme sichergestellt, dass bei laufendem Betrieb und einem Absinken der Umgebungstemperatur in den Frostbereich kein Einfrieren der Pumpe mit dadurch verursachtem Ausfall der Abgasnachbehandlung eintreten kann.

Nachstehend ist die Erfindung anhand von in der Zeichnung dargestellten Ausführungsbeispielen im Einzelnen erläutert. Es zeigen:
- Fig. 1: einen gegenüber einer praktischen Ausführungsform vergrößert und abgebrochen gezeichneten Längsschnitt lediglich des der Pumpe benachbarten Bereichs eines Ausführungsbeispiels des erfindungsgemäßen Systems;
- Fig. 2: einen abgebrochen, gegenüber Fig. 1 in kleinerem Maßstab sowie demgegenüber um 90° verdreht gezeichnetem Teilschnitt des der Pumpe benachbarten Bereichs, wobei eine zugeordnete Filtervorrichtung in unvollständiger Darstellung lediglich angedeutet ist;
- Fig. 3: eine der Fig. 2 entsprechende Darstellung eines abgewandelten Ausführungsbeispiels;
- Fig. 4: einen schematisch vereinfacht gezeichneten Längsschnitt lediglich der Filtervorrichtung für die Ausführungsbeispiele des erfindungsgemäßen Systems; und
- Fig. 5: einen vergrößert, schematisch vereinfacht und abgebrochen gezeichneten Teilschnitt lediglich des einem Endbereich der Filtervorrichtung benachbarten und Sensoren aufweisenden Bereichs eines weiteren Ausführungsbeispiels des erfindungsgemäßen Systems.

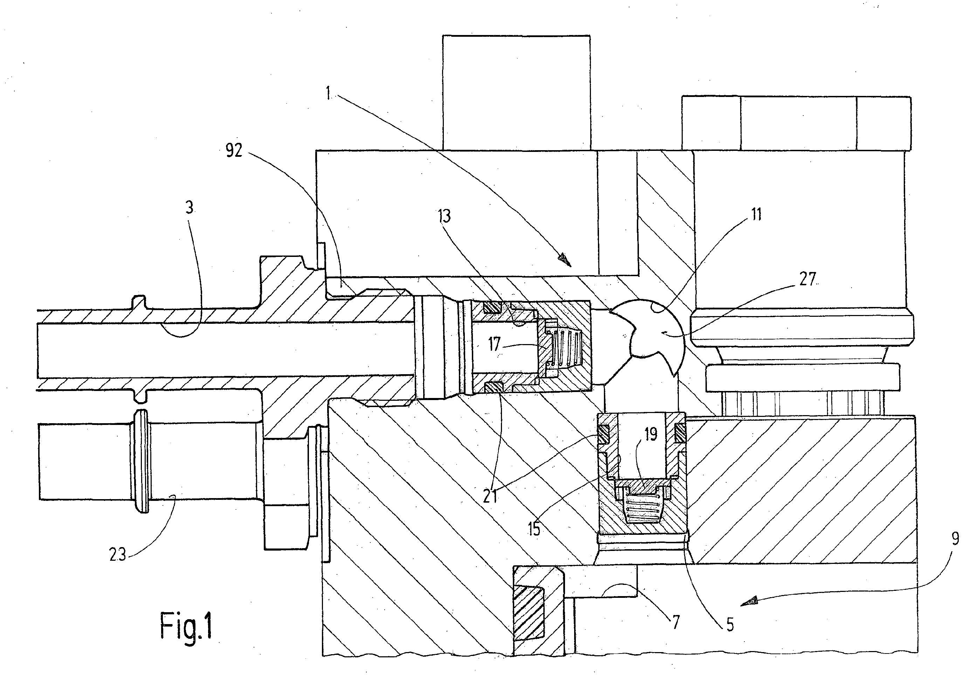

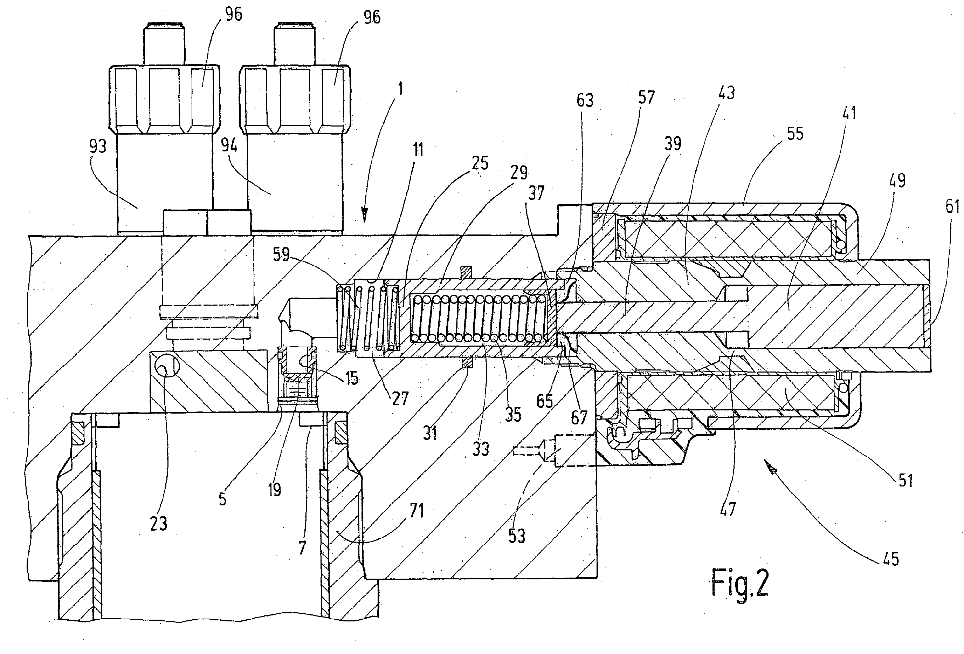

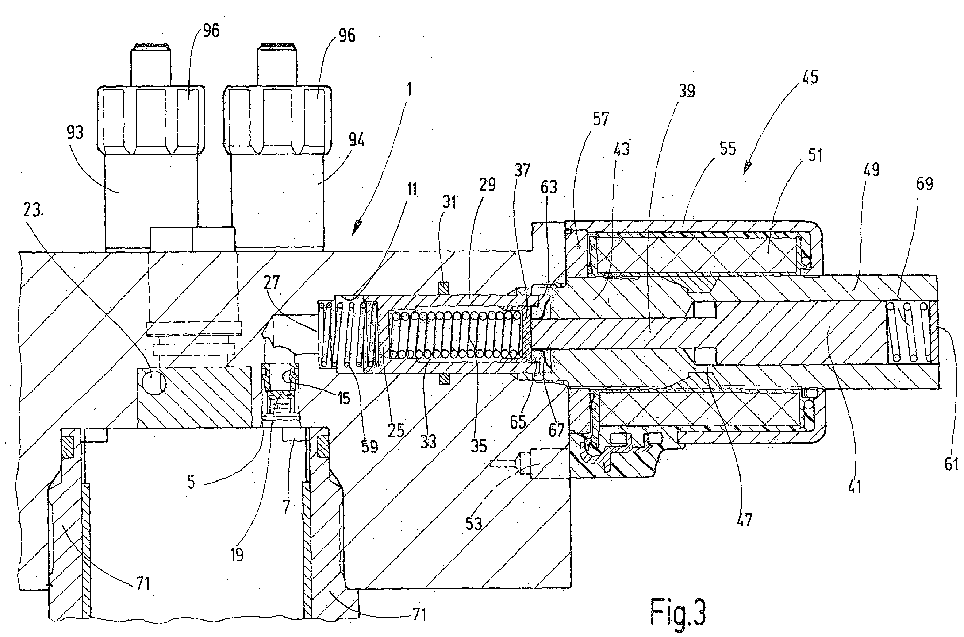

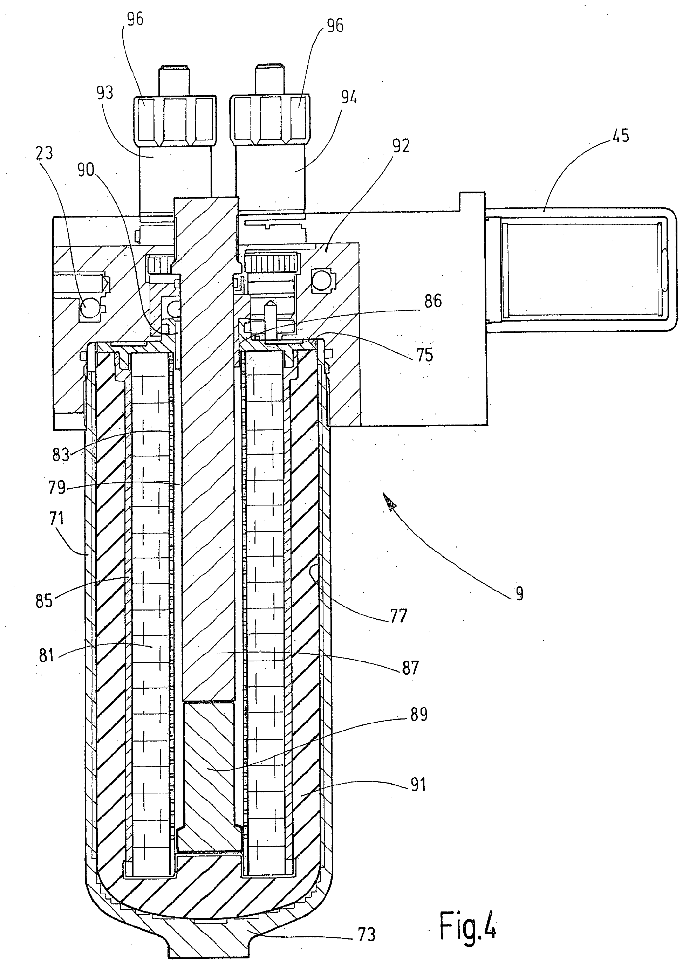

Von einem Ausführungsbeispiel des erfindungsgemäßen Systems zeigt die Fig. 1 eine Pumpe 1 als Bestandteil einer Zuführeinrichtung, die von einem nicht gezeigten Vorratstank, der einen Vorrat einer wässrigen Harnstofflösung enthält, über die Pumpe 1 zu einer am besten in Fig. 4 gezeigten Filtervorrichtung und von dieser zu einer (ebenfalls nicht gezeigten) Einspritzdüse führt, die eine dosierte Menge der Harnstofflösung in den Abgasstrahl sprüht. Zusätzlich kann eine weitere Pumpe oder sonstiges Fördersystem vorgesehen sein, die jeweils eine Druckerhöhung auf den endgültigen Einspritzdruck vornimmt. Die Harnstofflösung gelangt über eine Eingangsleitung 3 zur Pumpe 1, die eine dosierte Menge der Harnstofflösung vom Pumpenausgang 5 zum Filtereinlass 7 der Filtervorrichtung 9 fördert, die in Fig. 4 näher dargestellt ist. Wie den Fig. 2 und 3 entnehmbar ist, ist die Pumpe 1 als Kolbenpumpe ausgebildet, deren Zylinder 11 in Fig. 2 und 3 sichtbar ist, die gegenüber der Zeichnungsebene von Fig. 1 um 90° versetzt sind. Wie Fig. 1 zeigt, befinden sich an der Eingangsleitung 3 und am Ausgang 5 der Pumpe 1 jeweils ein Rückschlagventil 13 bzw. 15 mit federbelasteten Schließkörpern 17 bzw. 19, wobei das Rückschlagventil 13 beim Ansaugen der Pumpe 1 öffnet und das Rückschlagventil 15 beim Förderhub der Pumpe 1 öffnet. Dichtringe 21 bilden die Abdichtung an den Rückschlagventilen 13, 15. Die die Filtervorrichtung 9 verlassende Harnstofflösung gelangt über eine Ausgangsleitung 23 zum Abgasstrom.

Wie bereits erwähnt, ist die Pumpe 1 eine Kolbenpumpe. Der im Zylinder 11 geführte Pumpenkolben 25 ist an seinem vom Fluidraum 27 der Pumpe 1 abgewandten Ende durch ein Hülsenteil 29 verlängert, mit dem der Kolben 25 an der Wand des Zylinders 11 axial bewegbar geführt ist, wobei zur Abdichtung eine Kolbendichtung 31 vorgesehen ist. Der Innenraum 33 des Hülsenteils 29 ist an dem dem Fluidraum 27 entgegengesetzten Ende offen. Vom offenen Ende her ist in den Innenraum 33 eine Druckfeder 35 eingesetzt. Diese stützt sich einerseits am geschlossenen Boden des Hülsenteils 29 und andererseits an einem Druckstück 37 ab, das am offenen Ende des Hülsenteils 29 in diesem verschiebbar ist. Alternativ könnte das Druckstück auch innen angeordnet sein, müsste dann aber entsprechend gegenüber diesem Innenraum abgedichtet sein, beispielsweise mittels eines O-Ringes.

Mit der freien Seite des Druckstücks 37 wirkt ein Betätigungsteil 39 zusammen, das durch einen Fortsatz eines Magnetkolbens 41 gebildet ist. Dieses Betätigungsteil 39 ist in einem Polkörper 43 einer Elektromagneteinrichtung 45 verschiebbar geführt. Über eine Verjüngungsstelle 47 verringerten Materialquerschnitts, die eine magnetische Trennstelle bildet, geht der Polkörper 43 in ein Polrohr 49 über, in dem der mit dem Betätigungsteil 39 verbundene Magnetkolben 41 bewegbar ist. Die Magnetwicklung 51, die über eine Anschlusseinrichtung 53 bestrombar ist, befindet sich in einem ferromagnetischen Magnetgehäuse 55 mit einer Polplatte 57. Die Elektromagneteinrichtung 45 ist als sog. "drückender" Magnet ausgebildet, wobei der Magnetkolben 41 bei Bestromung der Magnetwicklung 51 das Betätigungsteil 39 gegen das Druckstück 37 und damit die Druckfeder 35 drückt. Dadurch wird über die Druckfeder 35 der Pumpenkolben 25 in der Zeichnung nach links für einen Förderhub bewegt, bei dem eine Dosismenge der Harnstofflösung aus dem Fluidraum 27 über das Rückschlagventil 15 am Pumpenausgang 5 abgegeben wird. Die Fig. 2 und 3 zeigen jeweils den unbestromten Zustand der Elektromagneteinrichtung 45. Durch Bestromen der Wicklung 51 bewegt das Betätigungsteil 39 den Kolben 25 für einen Förderhub in der Zeichnung nach links gegen die Kraft einer Rückstellfeder 59, die sich im Fluidraum 27 befindet und den Pumpenkolben 25 bei Beendigung der Bestromung der Wicklung 51 in die in Fig. 2 und 3 gezeigte Ausgangsstellung nach rechts zurück bewegt. Bei dem Ausführungsbeispiel von Fig. 2 liegt das freie Ende des Magnetkolbens 41 hierbei an einem Endanschlag an, der durch ein Abschlussstück 61 am Ende des Polrohres 49 gebildet ist.

Auch wenn sich der Magnetkolben 41 in einer Endposition befindet, wie es in Fig. 2 gezeigt ist, wo eine weitere Bewegung des Betätigungsteils 39 in eine Richtung blockiert ist, die der Vergrößerung des Volumens des Fluidraums 27 entspricht, ist eine Hubbewegung des Pumpenkolbens 25 möglich, weil die Druckfeder 35 ein nachgiebiges Bauteil darstellt, das bei einem übermäßigen Druckanstieg im Fluidraum 27 zusammendrückbar ist, so dass der Pumpenkolben 25 eine das Volumen des Fluidraums 27 vergrößernde Bewegung in der Zeichnung nach rechts ausführen kann, wobei sich das Ende 63 des Hülsenteils 29 in einen Freiraum 65 am Polkörper 43 bewegt. Dank der so gebildeten Nachgiebigkeit kann so die bei einem Gefrieren der Harnstofflösung im Fluidraum 27 auftretende Volumenvergrößerung schadlos kompensiert werden. Im Freiraum 65 befindet sich eine Membrandichtung 67 als zusätzliches Dichtelement.

Die Fig. 3 zeigt eine Variante, bei der anstelle des durch das Endstück 61 gebildeten festen Endanschlags des Magnetkolbens 41 eine Zusatzfeder 69 vorgesehen ist, die das Betätigungsteil 39 des Magnetkolbens 41 stets kraftschlüssig in Anlage am Druckstück 37 der Druckfeder 35 hält, jedoch eine geringere Federwirkung als die Rückstellfeder 59 besitzt.

Die Fig. 4 zeigt nähere Einzelheiten der Filtervorrichtung 9 mit einem Filtergehäuse 71 in Form eines kreiszylindrischen Topfes mit geschlossenem Boden 73. Das Gehäuse 71 ist am offenen Ende durch eine Endkappe 75 eines im Gehäuse 71 aufgenommenen Filterelements 77 geschlossen. Das Filterelement 77 weist ein einen hohlzylindrischen inneren Filterhohlraum 79 umgebendes Filtermedium 81 auf, dessen Innenseite an einem Stützrohr 83 anliegt und außenseitig von einem Stützkörper 85 umgeben ist. Dieser begrenzt innerhalb des Filtergehäuses 71 ein Teilvolumen, das den mit dem inneren Filterhohlraum 79 in Fluidverbindung stehenden Fluidraum als Teilvolumen des Gehäuses 71 begrenzt. Eingang (Filtereinlass 7 von Fig. 2 und 3) und Ausgang 90 des Fluidraums des Filtergehäuses 71 befinden sich an der Endkappe 75 des Filterelements 77. Durch eine zentrale Öffnung 86 der Endkappe 75 erstreckt sich ein elektrischer Heizstab 87 in den inneren Filterhohlraum 79. Für eine thermische Kopplung mit dem Heizstab 87 schließt sich an dessen Ende ein metallisches Füllstück 89 an.

Um bei einem Gefrieren der wässrigen Harnstofflösung in dem den Fluidraum bildenden Teilvolumen des Filtergehäuses 71 eine Vergrößerung des Teilvolumens relativ zum Restvolumen im Filtergehäuse 71 zu ermöglichen, ist als nachgiebiges Element zwischen der Innenwand des Gehäuses 71 und der Außenseite des Filterelements 77 eine Ummantelung 91 aus einem Werkstoff vorgegebener Kompressibilität vorgesehen. Beim vorliegenden Ausführungsbeispiel ist hierfür eine Ummantelung 91 aus Moosgummi vorgesehen, die beim gezeigten Beispiel, von der Endkappe 75 ausgehend, das Filterelement 77 vollständig ummantelt. Die Ummantelung 91 füllt somit das gesamte, innerhalb des Filtergehäuses 71 befindliche Restvolumen aus, das sich durch Zusammendrücken der Ummantelung 91 relativ zu dem den Fluidraum bildenden Teilvolumen verringert, um eine schadlose Vergrößerung des durch den Fluidraum gebildeten Teilvolumens zu ermöglichen, wenn die Harnstofflösung im Fluidraum gefriert.

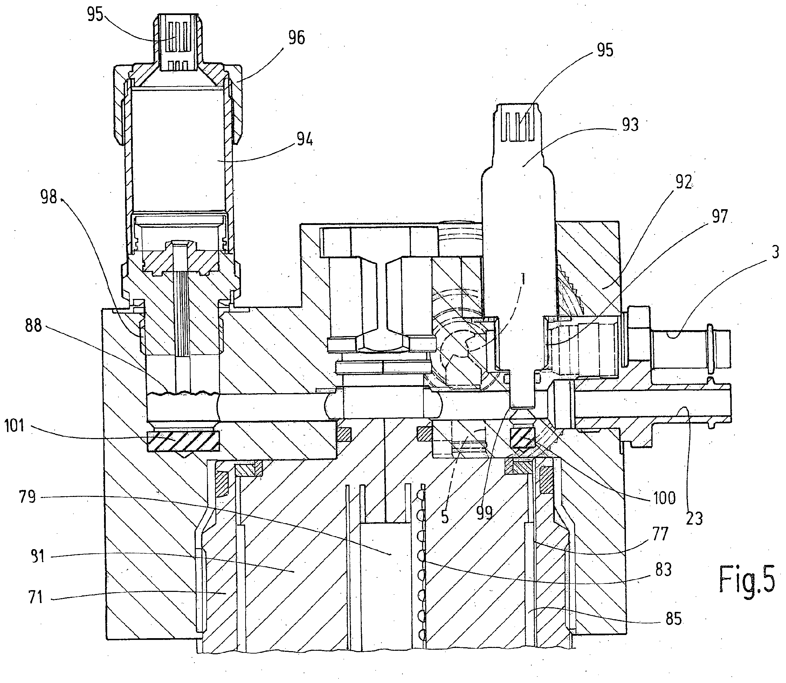

Die Fig. 5 zeigt von einem Ausführungsbeispiel des erfindungsgemäßen Systems den Anschlussteil 92 mit der zur Pumpe 1 führenden Eingangsleitung 3 und der Ausgangsleitung 23 für die dosierte Abgabe der Harnstofflösung. An der Ausgangsleitung 23 sind ein Temperatursensor 93 und ein Drucksensor 94 angeschlossen. An der elektrischen Steckverbindung 95 der Sensoren 93, 94 sind in Fig. 2 bis 4 jeweils Steckerkappen 96 eingezeichnet, während in Fig. 5 lediglich am Drucksensor 94 eine Steckerkappe 96 dargestellt ist. Beide Sensoren 93, 94 sind als Einschraubsensoren mittels Einschraubgewinden 97 bzw. 98 in den Anschlussteil 92 eingeschraubt. Dabei erstreckt sich der Messfühler 99 des Temperatursensors 93 in die Ausgangsleitung 23. Seitens des Drucksensors 94 ist ein Druck übertragendes Element, beispielsweise in Form einer Membran 88, in Fluidverbindung mit der Ausgangsleitung 23.

Jedem Sensor 93 und 94 ist als Gefrierschutz ein nachgiebiges Bauelement zugeordnet, das am Fluidbereich des jeweiligen Sensors 93, 94 ein nachgiebiges Wandteil bildet. Beim Temperatursensor 93 ist hierfür an dem dem Messfühler 99 gegenüberliegenden Teil der Ausgangsleitung 23 ein nachgiebiges Polster 100 vorgesehen, das beim vorliegenden Beispiel aus einem Würfel aus Moosgummi gebildet ist. Seitens des Drucksensors 94 ist ein an entsprechender Stelle der Ausgangsleitung 23 angeordnetes Polster 101 in Form einer Platte angeordnet, die ebenfalls aus Moosgummi gebildet ist und ebenfalls ein nachgiebiges Wandteil der Ausgangsleitung 23 am Eingangsbereich des Sensors 94 bildet. Durch diese Nachgiebigkeit ist die Volumenvergrößerung jeweils kompensierbar, die sich bei einem Gefrieren der wässrigen Harnstofflösung in der Ausgangsleitung 23 ergibt, so dass eine Beschädigung der Anschlussbereiche der Sensoren 93, 94, wie Messfühler 99 und Einschraubgewinde 97, 98 vermieden ist.

Es versteht sich, dass anstelle eines kompressiblen Körpers, wie dem Moosgummipolster, ein nachgiebiges Wandungsteil an der Ausgangsleitung 23 oder am Sensor 93, 94 vorgesehen sein könnte, etwa ein Bauelement, das, wie es in Fig. 2 und 3 gezeigt ist, durch ein Federelement abgestützt ist.

## Patentansprüche

1. System zur Abgasnachbehandlung bei einem Verbrennungsmotor, aufweisend zumindest eine Pumpe (1) für eine dosierte Zufuhr einer gefrierbaren Substanz, insbesondere in Form einer wässrigen Harnstofflösung, zu einer diese in den Abgasstrom des Verbrennungsmotors einführenden Zuführeinrichtung (23), wobei Teile der Pumpe (1) mit mindestens einem Fluidraum (27) für die zumindest zeitweise Aufnahme der gefrierbaren Substanz zusammenwirken, wobei als Schutz gegen eine Schädigung des Systems durch Volumenausdehnung bei Gefrieren der Substanz eine Ausgleichseinrichtung (25) auf den jeweiligen Fluidraum (27) derart einwirkt, dass eine mit einer Zunahme des Fluiddrucks bei Gefrieren einhergehende Volumenausdehnung der Substanz innerhalb des zuordenbaren Fluidraumes (27) kompensiert ist, wobei die Ausgleichseinrichtung zumindest ein mit dem Fluidraum (27) des Systems in Verbindung stehendes Bauteil (25) aufweist, das eine eine druckabhängige Vergrößerung des Fluidraums (27) ermöglichende, vorgegebene Nachgiebigkeit besitzt, wobei die Pumpe (1) vom Verdrängertyp mit zumindest einem durch einen Aktuator (39, 41) bewegbaren Verdrängerelement (25) als Bauteil vorgesehen ist, wobei dieses als Bestandteil der Ausgleichseinrichtung über eine eine druckabhängige Relativbewegung ermöglichende, nachgiebige Koppeleinrichtung (35, 37) mit dem Aktuator (39, 41) zusammenwirkt, wobei eine Kolbenpumpe mit zumindest einem Pumpenkolben (25) vorgesehen ist und wobei die Koppeleinrichtung (35, 37) eine zwischen dem jeweiligen Pumpenkolben (25) und dem Aktuator (39, 41) eingespannte Druckfeder (35) aufweist, die dem Pumpenkolben (25) gegen die Federkraft eine Bewegung relativ zum Aktuator (39, 41) ermöglicht, die den Fluidraum (27) vergrößert, **dadurch gekennzeichnet, dass** der Aktuator durch ein Betätigungsteil (39) eines Magnetkolbens (41) gebildet ist, der im Polrohr (49) einer Elektromagneteinrichtung (45) axial bewegbar ist.

2. System nach Anspruch 1, **dadurch gekennzeichnet, dass** der Pumpenkolben (25) an der vom Fluidraum (27) abgewandten Seite durch ein im Pumpenzylinder (11) geführtes Hülsenteil (29) verlängert ist, das zum Betätigungsteil (39) des Magnetkolbens (41) offen ist, und dass in dem Innenraum (33) des Hülsenteils (29) die Druckfeder (35) angeordnet ist.

3. System nach einem der vorstehenden Ansprüche, **dadurch gekennzeichnet, dass** die Elektromagneteinrichtung (45) als drückender Magnet ausgebildet ist, der bei Bestromung einer Magnetwicklung (51) den Magnetkolben (41) mit dem Betätigungsteil (39) gegen die Druckfeder (35) drückt und den Pumpenkolben (25) für einen Förderhub bewegt.

4. System nach Anspruch 3, **dadurch gekennzeichnet, dass** am Pumpenkolben (25) eine diesen bei fehlender Bestromung der Magnetwicklung (51) für einen Rückhub bewegende Rückstellfeder (59) angreift.

5. System nach Anspruch 3 oder 4, **dadurch gekennzeichnet, dass** am Magnetkolben (41) eine das Betätigungsteil (39) bei fehlender Bestromung der Magnetwicklung (51) kraftschlüssig gegen die Druckfeder (35) hin vorspannende Feder (69) vorgesehen ist, die der Kraft der Rückstellfeder (59) entgegenwirkt.

6. System nach einem der Ansprüche 3 bis 5, **dadurch gekennzeichnet, dass** eine sich bei Bestromung erwärmende Magnetwicklung (51) als Wärmequelle vorgesehen ist, die über eine thermische Kopplung mit der Pumpe (1) als Einfrierschutz und Auftaueinrichtung dient.

7. System nach einem der vorstehenden Ansprüche, **dadurch gekennzeichnet, dass** die Zuführeinrichtung (23) zumindest eine Filtervorrichtung (9) mit einem Filter zur Filtration der gefrierbaren Substanz aufweist.

8. System nach Anspruch 7, **dadurch gekennzeichnet, dass** die Ausgleichseinrichtung im Gehäuse (71) der Filtervorrichtung (9) zumindest ein nachgiebiges Element (91) aufweist, das eine druckabhängige Vergrößerung des Volumens des mit der Filtervorrichtung (9) zusammenwirkenden Fluidraumes (79) ermöglicht.

9. System nach einem der vorstehenden Ansprüche, **dadurch gekennzeichnet, dass** die Zuführeinrichtung (23) zumindest eine Sensoreinrichtung mit Sensoren (93, 94) aufweist, die Zustandsgrößen, bezogen auf die gefrierbare Substanz, wie Druck und Temperatur, erkennen.

10. System nachAnspruch 9, **dadurch gekennzeichnet, dass** Teile (100, 101) der Sensoreinrichtung mit mindestens einem Fluidraum (23) für die zumindest zeitweise Aufnahme der gefrierbaren Substanz zusammenwirken und dass die Ausgleichseinrichtung zumindest ein nachgiebiges Element (100, 101) aufweist, das eine druckabhängige Vergrößerung des Fluidraums (23) ermöglicht.

## Claims

1. System for exhaust gas treatment for an internal combustion engine, comprising at least one pump (1) for a metered supply of a freezable substance, especially in the form of an aqueous urea solution, to a supply device (23) introducing said solution into the exhaust gas flow of the internal combustion engine, wherein parts of the pump (1) interact with at least one fluid chamber (27) for at least partially receiving the freezable substance, wherein, to protect the system against damage due to volume expansion when the substance freezes, a compensation device (25) acts on the respective fluid chamber (27) in such a way that a volume expansion of the substance associated with an increase in the fluid pressure on freezing is compensated inside the associated fluid chamber (27), wherein the compensation device comprises at least one component connected to the fluid chamber (27) of the system, said component having pre-defined flexibility to permit a pressure-dependent expansion of the fluid chamber (27), wherein the pump (1) of the displacement type is provided with at least one displacement element (25) as a component that can be moved by means of an actuator (39, 41), wherein this component, as part of the compensation device, interacts with the actuator (39, 41) by means of a flexible coupling device (35, 37) which permits a pressure-dependent relative movement, wherein a piston pump with at least one pump piston (25) is provided and wherein the coupling device (35, 37) comprises a compression spring (35) clamped between the respective pump piston (25) and the actuator (39, 41), said compression spring allowing the pump piston (25) to move against the compressive force in relation to the actuator (39, 41), said movement enlarging the fluid chamber (27), **characterised in that** the actuator is formed by an actuating part (39) of a magnetic piston (41), which can be moved axially in the pole tube (49) of a solenoid device (45).

2. System according to claim 1, **characterised in that** the pump piston (25) is extended on the side facing away from the fluid chamber (27) by means of a sleeve portion (29) mounted in the pump cylinder (11), said sleeve portion being open to the actuating part (39) of the magnetic piston (41), and **in that** the compression spring (35) is arranged in the inner chamber (33) of the sleeve portion (29).

3. System according to any one of the preceding claims, **characterised in that** the solenoid device (45) is designed as a push-type solenoid, which, when a magnet winding (51) is energised, pushes the magnetic piston (41) with the actuating part (39) against the compression spring (35) and moves the pump piston (25) for a delivery stroke.

4. System according to claim 3, **characterised in that** a return spring (59) acts on the pump piston (25), moving said pump piston for a return stroke in the event of the magnet winding (51) not being energised.

5. System according to either claim 3 or claim 4, **characterised in that** a spring (69) pre-tensioning the actuating part (39) in a force-locking manner against the compression spring (35) if the magnet winding (51) is not energised is provided, said spring (69) working against the force of the return spring (59).

6. System according to any one of claims 3 to 5, **characterised in that** a magnet winding (51) that heats up when energised is provided as a heat source, said magnet winding acting as a frost protection and defrosting device by means of a thermal coupling with the pump (1).

7. System according to any one of the preceding claims, **characterised in that** the supply device (23) comprises at least one filter device (9) with a filter to filter the freezable substance.

8. System according to claim 7, **characterised in that** the compensation device in the housing (71) of the filter device (9) comprises at least one flexible element (91), which allows the volume of the fluid chamber interacting with the filter device (79) to expand in a pressure-dependent manner.

9. System according to any one of the preceding claims, **characterised in that** the supply device (23) comprises at least one sensor device with sensors (93, 94) that recognise state variables in relation to the freezable substance, such as pressure and temperature.

10. System according to claim 9, **characterised in that** parts (100, 101) of the sensor device interact with at least one fluid chamber (23) for at least partially receiving the freezable substance and **in that** the compensation device comprises at least one flexible element (100, 101) that allows the fluid chamber (23) to expand in a pressure-dependent manner.

## Revendications

1. Système de post-traitement des gaz d'échappement pour un moteur à combustion interne, comportant au moins une pompe (1) d'apport dosé d'une substance congelable, notamment sous la forme d'une solution aqueuse d'urée, à un dispositif (23) d'apport la conduisant dans le courant de gaz d'échappement du moteur à combustion interne, des parties de la pompe (1) coopérant avec au moins un espace (27) à fluide pour la réception, au moins de temps en temps, de la substance congelable dans lequel, comme protection vis-à-vis d'un endommagement du système par augmentation du volume à la congélation de la substance, un dispositif (25) de compensation agit sur l'espace (27) pour du fluide, de manière à compenser une augmentation du volume inhérente à une élévation de la pression du fluide à la congélation de la substance dans l'espace (27) pour du fluide pouvant être associée, le dispositif de compensation ayant au moins une partie (25) constitutive en liaison avec l'espace (27) pour du fluide du système qui a une flexibilité donnée à l'avance permettant un agrandissement, en fonction de la pression, de l'espace (27) pour du fluide, la pompe (1) de type volumétrique étant prévue comme partie constitutive avec au moins un élément (25) déplaceur pouvant être déplacé par un actionneur (39, 41), celle-ci, comme partie constitutive du dispositif de compensation, coopérant avec l'actionneur (39, 41) par un dispositif (35, 37) d'accouplement souple permettant un mouvement relatif en fonction de la pression, une pompe à piston ayant au moins un piston (25) de pompe étant prévue et le dispositif (35, 37) d'accouplement ayant un ressort (35) de compression, qui est monté entre le piston (25) de la pompe et l'actionneur (39, 41) et qui permet au piston (25) de la pompe, à l'encontre de la force du ressort, d'effectuer un déplacement par rapport à l'actionneur (39, 41) qui agrandit l'espace (27) pour du fluide, **caractérisé en ce que** l'actionneur est formé d'une partie (39) d'actionnement d'un piston (41) magnétique, qui peut être déplacé axialement dans le tube (49) polaire d'un dispositif (45) électromagnétique.

2. Système suivant la revendication 1, **caractérisé en ce que** le piston (25) de la pompe est, du côté loin de l'espace (27) pour du fluide, prolongé par un manchon (29) guidé dans le cylindre (11) de la pompe et ouvert vers la partie (39) d'actionnement du piston (41) magnétique et **en ce qu'**un ressort (35) de compression est disposé à l'intérieur (33) du manchon (29).

3. Système suivant l'une des revendications précédentes, **caractérisé en ce que** le dispositif (45) électromagnétique est constitué sous la forme d'un aimant de poussée qui, lorsqu'un enroulement (51) magnétique est alimenté en courant, pousse le piston (41) magnétique, par la partie (39) d'actionnement, sur le ressort (35) de compression et déplace le piston (25) de la pompe pour une course de refoulement.

4. Système suivant la revendication 3, **caractérisé en ce qu'**un ressort (59) de rappel attaque le piston (25) de la pompe pour le déplacer pour une course de retour, si l'alimentation en courant de l'enroulement (51) magnétique est défaillante.

5. Système suivant la revendication 3 ou 4, **caractérisé en ce qu'**il est prévu au piston (41) magnétique un ressort (69) qui s'oppose à la force du ressort (59) de rappel et qui précontraint la partie (39) d'actionnement, si l'alimentation en courant de l'enroulement (51) magnétique est défaillant, en appliquant une force vers le ressort (35) de compression.

6. Système suivant l'une des revendications 3 à 5, **caractérisé en ce qu'**il est prévu comme source de chaleur un enroulement (51) magnétique s'échauffant lors de l'alimentation en courant, source qui sert, par un couplage thermique avec la pompe (1), de protection à la congélation et de dispositif de décongélation.

7. Système suivant l'une des revendications précédente, **caractérisé en ce que** le dispositif (23) d'apport a au moins un système (9) de filtration ayant un filtre pour la filtration de la substance congelable.

8. Système suivant la revendication 7, **caractérisé en ce que** le dispositif de compensation a, dans l'enveloppe (71) du système (9) de filtration, au moins un élément (91) souple qui rend possible un agrandissement en fonction de la pression du volume de l'espace (79) pour du fluide coopérant avec le système (9) de filtration.

9. Système suivant l'une des revendications précédentes, **caractérisé en ce que** le dispositif (23) d'apport a au moins un dispositif à capteur ayant des capteurs (93, 94) qui détectent les grandeurs d'état se rapportant à la substance congelable, comme la pression et la température.

10. Système suivant la revendication 9, **caractérisé en ce que** des parties (100, 1001) du dispositif à capteur coopèrent avec au moins un espace (23) pour du fluide pour la réception, au moins de temps en temps, de la substance congelable et **en ce que** le dispositif de compensation a au moins un élément (100, 101) souple qui rend possible un agrandissement en fonction de la pression de l'espace (23) pour du fluide.
